# EUROPÄISCHE PATENTANMELDUNG

(11) **EP 2 792 525 A1**
(43) Veröffentlichungstag der Anmeldung: **22.10.2014**
(21) Anmeldenummer: 13181169.7
(22) Anmeldetag: 21.08.2013
(51) Int. Cl.: B60K 15/03, B60K 15/07

(54) **Vorrichtung zur Gasversorgung**

(30) Priorität: 15.04.2013 DE 202013101593 U; 10.06.2013 DE 102013210750
(71) Anmelder: EES-Autogas Technologiezentrum UG, 89561 Dischingen (DE)
(72) Erfinder: Seiboth, Joachim, 89561 Dischingen (DE)
(74) Vertreter: Schmid, Wolfgang

(57) **Zusammenfassung**

Die Erfindung betrifft eine Vorrichtung (1) zur Gasversorgung von Verbrauchern mit wenigstens einem LNG-Tank (43) zur Aufnahme von Flüssigerdgas, wenigstens einem Boil-Off-Tank (42) zur Aufnahme von aus dem LNG-Tank (43) austretendem Boil-Off-Gas, einer Zuführeinrichtung (51) zur Zuführung des aus dem wenigstens einem LNG-Tank (43) austretenden Boil-Off-Gases zu dem wenigstens einen Boil-Off-Tank (42), einer Umwandlungseinrichtung (44) zur Umwandlung des in dem LNG-Tank (43) enthaltenen Flüssigerdgases in gasförmiges Gas. Der Verbraucher ist ein mit Gas betreibbarer Verbrennungsmotor (41) eines Nutzfahrzeugs (40). Der wenigstens eine LNG-Tank (43) und der wenigstens eine Boil-Off-Tank (42) sind an einer Zugmaschine (53) des Nutzfahrzeugs (40) angebracht.

## Beschreibung

Die Erfindung betrifft eine Vorrichtung zur Gasversorgung von Verbrauchern.

Nutzfahrzeuge, wie zum Beispiel große LKW, werden üblicherweise von Dieselmotoren angetrieben. Aufgrund des in jüngster Zeit immer stärker steigenden Preises von Dieselkraftstoff ist jedoch auch bei großen LKW ein Trend hin zu mit Gas betriebenen Verbrennungsmotoren zu erkennen, und zwar sowohl zu Erdgas (CNG bzw. compressed natural gas) als auch zu Flüssigerdgas (LNG bzw. liquified natural gas). Problematisch ist jedoch, dass die zur Aufnahme von CNG dienenden Gasbehälter meist ein größeres Volumen als Dieseltanks aufweisen und damit mehr Platz am Fahrzeug benötigen, wodurch letztendlich die Reichweite von mit Gas betriebenen Nutzfahrzeugen meist geringer ist als von Nutzfahrzeugen, die mit Dieselkraftstoff betrieben werden.

In der DE 20 2012 103 321 U1 ist unter anderem eine Vorrichtung zur Anordnung von Gasbehältern an einem Anhänger eines Nutzfahrzeugs beschrieben, mit der dieses Problem beseitigt werden soll.

Ein Problem bei der Nutzung von Flüssigerdgas (LNG) besteht darin, dass dieses kontinuierlich verdampft, sodass sich täglich ein gewisser Prozentsatz des Flüssigerdgases in gasförmiges Erdgas umwandelt. Bislang wird dieses sogenannte Boil-Off-Gas (BOG) entweder unkontrolliert abgelassen, was eine erhebliche Umweltgefährdung darstellt, oder verbrannt, wodurch ein großer Teil des Flüssigerdgases verschwendet wird.

Es ist daher Aufgabe der vorliegenden Erfindung, eine Vorrichtung zur Gasversorgung von Verbrauchern zu schaffen, mit der eine zuverlässige Versorgung auch von Nutzfahrzeugen möglich ist.

Erfindungsgemäß wird diese Aufgabe durch die in Anspruch 1 genannten Merkmale gelöst.

Die erfindungsgemäße Vorrichtung mit dem wenigstens einen LNG-Tank, in dem sich Flüssigerdgas (LNG bzw. liquified natural gas) befindet, ermöglicht die ausschließliche Versorgung des mit Gas betriebenen Nutzfahrzeugs mit dem von der Infrastruktur weitgehend unabhängigen LNG, das durch die Umwandlungseinrichtung in gasförmiges Gas umgewandelt werden kann. Dadurch ist es nicht unbedingt erforderlich, die Vorrichtung bzw. den Verbrennungsmotor mit Erdgas (CNG bzw. compressed natural gas) zu beliefern. Da das auf eine Temperatur von ca. -162 °C gekühlte Flüssigerdgas eine ca. 600-fache Füllkapazität gegenüber Erdgas hat, können beim Transport erhebliche Kosten eingespart werden. Des Weiteren ergibt sich eine erhebliche Platzersparnis und zudem eine große Vereinfachung der erfindungsgemäßen Vorrichtung, weil die Nutzung derselben unabhängig von einer regionalen Erdgasversorgung ermöglicht wird.

Das Flüssigerdgas bzw. flüssige Erdgas bzw. LNG wird bei einer Temperatur von ca. -162°C in speziellen Kryogen-Speichereinheiten transportiert. Beim Befüllen des LNG-Tanks sowie der Lagerung und der Entnahme des Flüssigerdgases entsteht eine Erwärmung der obersten Schicht desselben. Zur Vermeidung einer Druckerhöhung und einer weiteren Erwärmung muss dieses BoilOff-Gas, von Zeit zu Zeit aus dem LNG-Tank abgelassen werden. Bislang wurde dieses Boil-Off-Gas hauptsächlich verbrannt oder verflüssigt.

Im Gegensatz dazu erlaubt die erfindungsgemäße Vorrichtung eine Verwendung des in den gasförmigen Zustand übergehenden Flüssigerdgases als CNG, indem mittels der Zuführeinrichtung das aus dem LNG-Tank austretende Boil-Off-Gas zu dem wenigstens einen Boil-Off-Tank geleitet wird. Von dem Boil-Off-Tank kann das Gas dann dem Verbrennungsmotor des Nutzfahrzeugs zugeführt und somit zum Antrieb des Nutzfahrzeugs eingesetzt werden.

Dadurch, dass der wenigstens eine LNG-Tank und der wenigstens eine BoilOff-Tank an einer Zugmaschine des Nutzfahrzeugs angebracht sind, ist vorteilhafterweise sichergestellt, dass die Zugmaschine zu jedem Zeitpunkt und in jeder Konfiguration, insbesondere auch ohne Anhänger, fahrbereit ist.

Um das Nutzfahrzeug sehr einfach mit Erdgas versorgen zu können, kann des Weiteren wenigstens ein CNG-Tank zur Aufnahme von gasförmigem Gas und zur Zuführung des Gases zu dem Verbrennungsmotor vorgesehen sein. Durch den wenigstens einen CNG-Tank zur Aufnahme von gasförmigem Gas und die wenigstens eine Entnahmeeinrichtung kann das Gas aus dem CNG-Tank entnommen und dem Verbrennungsmotor zugeführt werden. Dies ermöglicht einen erheblich variableren Betrieb des Nutzfahrzeugs.

Wenn der wenigstens eine CNG-Tank an der Zugmaschine des Nutzfahrzeugs angebracht ist, kann der oben beschriebene unabhängige Betrieb des Nutzfahrzeugs gewährleistet werden.

Eine größere Kapazität sowie eine verbesserte Variabilität der erfindungsgemäßen Vorrichtung ergibt sich, wenn mehrere CNG-Tanks vorgesehen sind.

Um LKW und andere Nutzfahrzeuge oder deren Verbrennungsmotoren sehr einfach, sicher und optimal mit Erdgas versorgen zu können, kann des Weiteren eine Steuereinrichtung zur Steuerung der Reihenfolge der Entnahme von Gas aus dem Boil-Off-Tank, dem LNG-Tank und gegebenenfalls dem CNG-Tank vorgesehen sein. Die Steuereinrichtung leitet vorrangig das Boil-Off-Gas dem Verbraucher, d. h. dem Verbrennungsmotor, zu, sodass überschüssiges Boil-Off-Gas nicht ungenutzt an die Umwelt abgegeben werden muss. Zudem kann die Steuereinrichtung nach Kundenwunsch programmiert werden. Die Steuerung kann als Vorrangig- bzw. Nachrangigkeitsschaltung ausgeführt sein, wobei, falls gewisse Füllmengen des Boil-Off-Tanks, des LNG-Tanks und/oder des CNG-Tanks unter- oder überschritten sind, die Steuerung die Reihenfolge und zeitliche Dauer der Gasentnahme berechnet und festlegt.

Im Hinblick auf eine rasche Verwertung des Boil-Off-Gases ist es besonders vorteilhaft, wenn die Steuereinrichtung die Entnahme von Gas derart steuert, dass die Entnahme zuerst aus dem Boil-Off-Tank und nach Unterschreiten einer bestimmten Füllmenge in dem Boil-Off-Tank aus dem LNG-Tank oder gegebenenfalls dem CNG-Tank erfolgen kann.

Die Zuführeinrichtung zur Zuführung des aus dem wenigstens einen LNG-Tank austretenden Boil-Off-Gases zu dem wenigstens einen Boil-Off-Tank kann einen Wärmetauscher aufweisen. Dabei kann das Boil-Off-Gas mittels des Wärmetauschers von einer Temperatur von ca. -140 °C auf eine Temperatur von ca. +25 °C erwärmt werden, um in dem Boil-Off-Tank gespeichert zu werden. Das Boil-Off-Gas dabei durch den Eigendruck aus dem Boil-Off-Tank ausströmen.

Um bei einer unerwünschten Druckerhöhung in einer der Leitungen der erfindungsgemäßen Versorgungsvorrichtung einen raschen Druckabbau zu ermöglichen und größere Probleme zu vermeiden, kann in einer zu dem Verbrennungsmotor führenden Leitung ein Druckregler angeordnet sein, von dem eine Abzweigleitung in ein Abgassystem des Verbrennungsmotors führt.

Wenn in diesem Zusammenhang in dem Abgassystem eine Zündeinrichtung vorgesehen ist, so ist eine sehr einfache Zündung des in das Abgassystem geleiteten Gases möglich.

Wenn des Weiteren an der Zugmaschine ein Feuerlöschmittel-Behälter angeordnet ist, der mit wenigstens einem Ventil zur Ausgabe des Feuerlöschmittels verbunden ist, welches mit einem Brandmelder verbunden ist, so kann im Notfall eine sehr rasche und sichere Löschung eines Brandes erfolgen. Nachfolgend ist ein Ausführungsbeispiel der Erfindung anhand der Zeichnung prinzipmäßig dargestellt.

Es zeigt:
- Fig. 1: eine Prinzipdarstellung der erfindungsgemäßen Vorrichtung;
- Fig. 2: die Vorrichtung aus Fig. 1 in einem in mehrere Container eingebauten Zustand;
- Fig. 3: eine erste Ausführungsform der erfindungsgemäßen Vorrichtung an einem gasbetriebenen Nutzfahrzeug;
- Fig. 4: eine Draufsicht auf die Vorrichtung aus Fig. 3;
- Fig. 5: eine weitere Ausführungsform der erfindungsgemäßen Vorrichtung an einem gasbetriebenen Nutzfahrzeug; und
- Fig. 6: eine weitere Ausführungsform der erfindungsgemäßen Vorrichtung an einem gasbetriebenen Nutzfahrzeug.

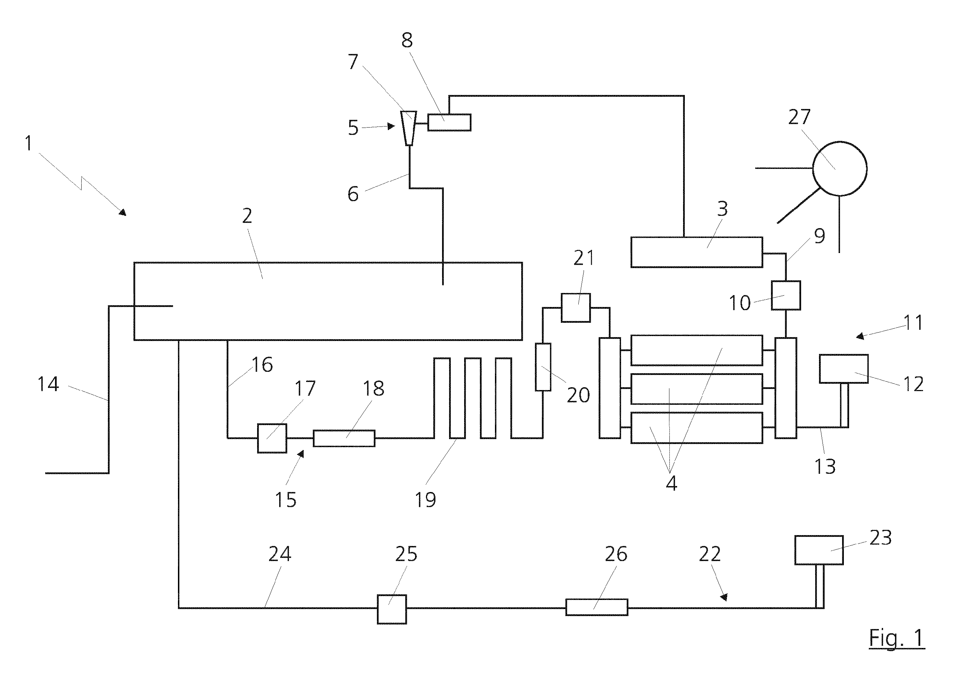

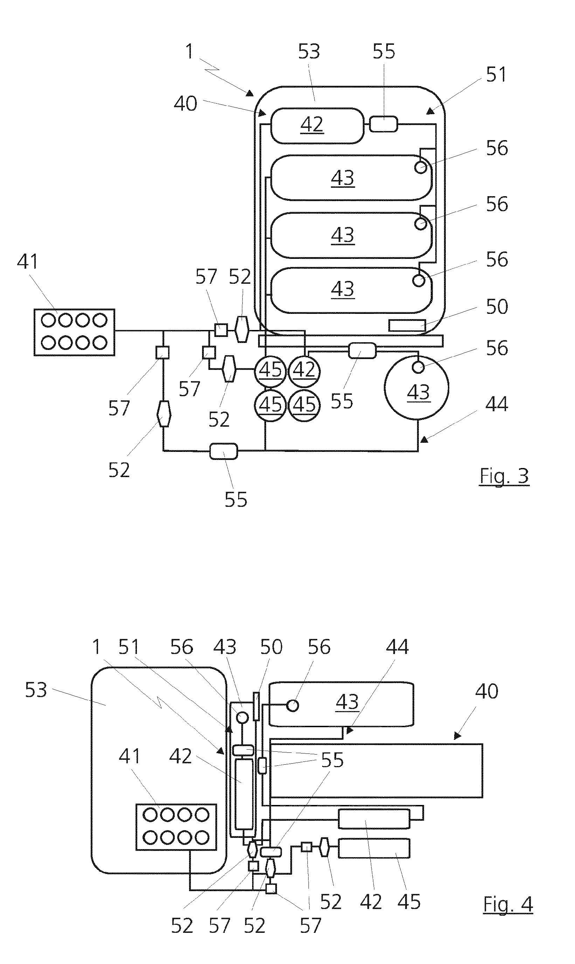

Fig. 1 zeigt eine Vorrichtung 1 zur Versorgung von Verbrauchern mit Gas. Die nachfolgende Beschreibung der Vorrichtung 1, in dem diese als schnell auf-und gegebenenfalls wieder abbaubare Tankstelle ausgebildet ist, dient lediglich zur Veranschaulichung eines möglichen Aufbaus derselben und ist nicht als Einschränkung zu verstehen. Wie nachfolgend deutlich wird, handelt es sich bei dem von der Vorrichtung 1 versorgten Verbraucher um einen in den Figuren 3 - 7 dargestellten, mit Gas betreibbaren Verbrennungsmotor 41 eines ebenfalls in den Figuren 3 - 7 dargestellten Nutzfahrzeugs 40. Für den Einsatz der Vorrichtung 1 an dem Nutzfahrzeug 40, der unter Bezugnahme auf die Figuren 3 - 7 noch näher beschrieben wird, können verschiedene Bestandteile der Vorrichtung 1 weggelassen werden.

Die Vorrichtung 1 weist einen LNG-Tank 2 auf, der zur Aufnahme von LNG, also liquified natural gas dient, das nachfolgend der Einfachheit halber als "Flüssigerdgas" bezeichnet wird. Dieses Flüssigerdgas wird bei einer Temperatur von ca. -162 °C transportiert und gelagert. Des Weiteren weist die Vorrichtung 1 einen Boil-Off-Tank 3 auf, der zur Aufnahme von aus dem LNG-Tank 2 austretendem Boil-Off-Gas dient. Zusätzlich ist im dargestellten Ausführungsbeispiel wenigstens ein, im vorliegenden Fall drei CNG-Tanks 4 vorgesehen, in den sich CNG, also compressed natural gas befindet, das nachfolgend der Einfachheit halber als "Erdgas" bezeichnet wird. Gegebenenfalls könnten auch zusätzliche LNG-Tanks und/oder zusätzliche Boil-Off-Tanks vorgesehen sein.

Bei der Befüllung des LNG-Tanks 2 sowie der Lagerung und der Entnahme des Flüssigerdgases aus dem LNG-Tank 2 ergibt sich eine Erwärmung der obersten Schicht des Flüssigerdgases. Um eine Druckerhöhung und eine zu starke Erwärmung des gesamten Inhalts des LNG-Tanks 2 zu verhindern, muss dieses sogenannte Boil-Off-Gas dem LNG-Tank 2 entnommen werden. Um das Boil-Off-Gas dem Boil-Off-Tank 3 zuzuführen, ist eine Zuführeinrichtung 5 vorgesehen. Die Zuführeinrichtung 5 weist im vorliegenden Fall eine von dem LNG-Tank 2 zu dem Boil-Off-Tank 3 führende Leitung 6, einen in der Leitung 6 angeordneten Kompressor 7 und einen ebenfalls in der Leitung 6 angeordneten, dem Kompressor 7 nachgeschalteten Wärmetauscher 8 auf. Während der Kompressor 7 dazu dient, das Boil-Off-Gas aus dem LNG-Tank 2 abzusaugen, wird das Boil-Off-Gas in dem Wärmetauscher 8 von einer Temperatur von ca. - 140 °C auf eine Temperatur von ca. +25 °C erwärmt, um in dem Boil-Off-Tank 3 gespeichert zu werden. Insofern kann der Boil-Off-Tank 3 als Speicherbehälter bzw. Auffangbehälter für das Boil-Off-Gas angesehen werden.

Der Boil-Off-Tank 3 ist mittels einer Verbindungsleitung 9 mit dem wenigstens einen, im vorliegenden Fall mit allen drei CNG-Tanks 4, verbunden. Auf diese Weise kann das Boil-Off-Gas in einen der CNG-Tanks 4 geleitet werden. Um das in dem Boil-Off-Tank 3 gespeicherte Boil-Off-Gas auf den in den CNG-Tanks 4 herrschenden Druck zu bringen, ist in der Verbindungsleitung 9 eine Verdichtungspumpe 10 angeordnet, mit der das Boil-Off-Gas im vorliegenden Fall von einem Druck von ca. 2 bar auf einen Druck von ca. 250 bar verdichtet wird.

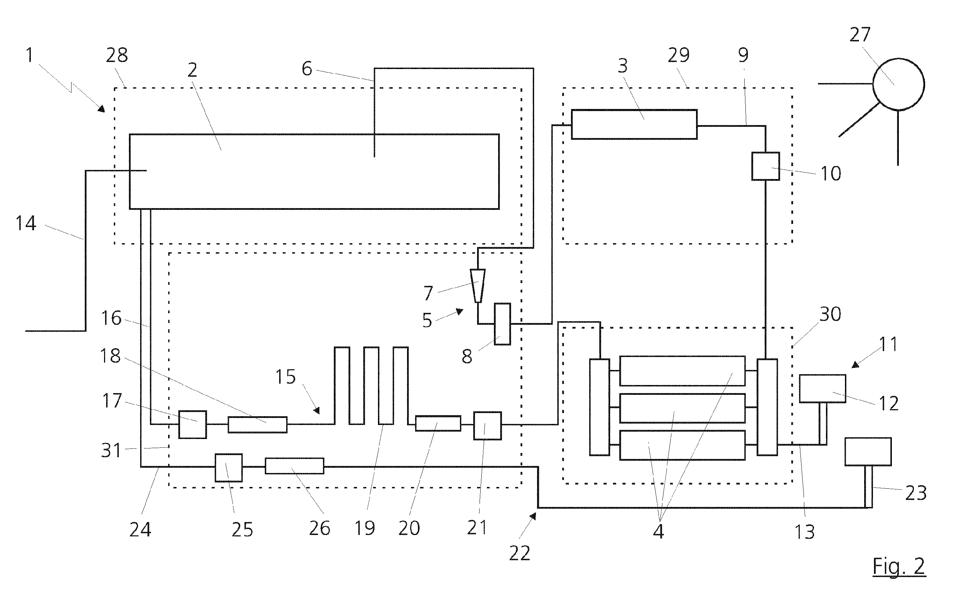

Um den nicht dargestellten Verbrauchern das in den CNG-Tanks enthaltene Erdgas zuführen zu können, weist die Vorrichtung 1 eine Entnahmeeinrichtung 11 auf. Die Entnahmeeinrichtung 11 weist in dem in den Figuren 1 und 2 dargestellten Fall eine Tank- bzw. Zapfsäule 12 und eine von den CNG-Tanks 4 zu der Zapfsäule 12 führende Leitung 13 auf. Über die Zapfsäule 12 kann das Erdgas in an sich bekannter Weise den CNG-Tanks 4 entnommen werden. Alternativ zu der Zapfsäule 12 kann die Entnahmeeinrichtung 11 auch ein mit Erdgas betriebenes Stromaggregat aufweisen, das beispielsweise auf einer Baustelle zur Stromversorgung von Baumaschinen, wie beispielsweise Kränen, eingesetzt werden kann.

Es ist vorgesehen, die Vorrichtung 1 ausschließlich mit Flüssigerdgas zu versorgen, das dem LNG-Tank 2 über eine Leitung 14 zugeführt wird. Mit anderen Worten, es ist nicht notwendig, der Vorrichtung 1 gasförmiges Erdgas zuzuführen. Das auf eine Temperatur von ca. -162 °C gekühlte Flüssigerdgas hat eine ca. 600-fache Füllkapazität gegenüber Erdgas, wodurch beim Transport erhebliche Kosten eingespart werden können. Da die Menge an aus dem LNG-Tank 2 austretendem Boil-Off-Gas bei Weitem nicht für eine ausreichende Versorgung der Verbraucher mit Erdgas ausreicht, wird das in dem LNG-Tank 2 enthaltene Flüssigerdgas wie nachfolgend beschrieben in CNG bzw. Erdgas umgewandelt. Auch eine direkte Verwendung des Flüssigerdgases in dem Verbrennungsmotor 41 des Nutzfahrzeugs 40 ist denkbar.

Zur Umwandlung des in dem LNG-Tank 2 enthaltenen Flüssigerdgases in CNG bzw. Erdgas weist die Vorrichtung 1 eine Umwandlungseinrichtung 15 auf, die eine von dem LNG-Tank 2 zu den CNG-Tanks 4 führende Leitung 16 aufweist. In der Leitung 16 sind die nachfolgend näher beschriebenen Bauteile angeordnet, die ebenfalls zu der Umwandlungseinrichtung 15 zu zählen sind: eine Kryogenpumpe 17, ein Druckregler 18, ein Verdampfer 19, ein Odoriermittelbehälter 20 und eine Verdichtungspumpe 21. Die Kryogenpumpe 17, die speziell auf die Verarbeitung sehr kalter Materialien ausgelegt ist, dient dazu, das Flüssigerdgas zu dem Verdampfer 19 zu transportieren, wobei mittels des Druckreglers 18 der Druck des Flüssigerdgases in der Leitung 16 geregelt wird. In dem als Flächenverdampfer ausgebildeten Verdampfer 19 wird das Flüssigerdgas erwärmt und geht vom flüssigen in den gasförmigen Zustand über. In dem Odoriermittelbehälter 20 wird dem verdampften und damit gasförmigen Gas in an sich bekannter Weise ein Duftstoff beigemengt. Die dem Verdampfer 19 und dem Odoriermittelbehälter 20 nachgeschaltete Verdichtungspumpe 21 dient dazu, das Gas von einem Druck von ca. 2 bar auf einen Druck von ca. 250 bar zu verdichten und den CNG-Tanks 4 zuzuführen. Das Flüssigerdgas wird also in einem zweistufigen Verdichtungsverfahren auf einen Druck von im vorliegenden Fall 250 bar komprimiert. Damit befindet sich in den CNG-Tanks 4 Erdgas, das, wie oben beschrieben, über die Entnahmeeinrichtung 11 entnommen werden kann.

Dabei kann vorgesehen sein, dass das in dem Boil-Off-Tank 3 enthaltene BoilOff-Gas vorrangig entnommen, d. h. der Entnahmeeinrichtung 11 zugeführt werden kann, und dass erst nachrangig das in den CNG-Tanks 4 enthaltene Erdgas über die Entnahmeeinrichtung 11 den Verbrauchern zugeführt wird.

Um mit der Vorrichtung 1 auch solche Verbraucher versorgen zu können, die in der Lage sind, Flüssigerdgas zu verarbeiten oder die gar direkt mit Flüssigerdgas betrieben werden können, ist eine weitere Entnahmeeinrichtung 22 vorgesehen, die in dem in den Figuren 1 und 2 dargestellten Fall eine Tank- bzw. Zapfsäule 23 sowie eine von dem LNG-Tank 2 zu der Zapfsäule 23 führende Leitung 24 aufweist. In der Leitung 24 sind außerdem eine Kryogenpumpe 25 sowie ein Druckregler 26 vorgesehen, die identisch oder ähnlich zu der Kryogenpumpe 17 bzw. dem Druckregler 18 der Umwandlungseinrichtung 15 ausgeführt sein können. Des Weiteren können in der Leitung 24 ein oder mehrere, nicht dargestellte Rückschlagventile vorgesehen sein, die ein unkontrolliertes Austreten des Flüssigerdgases verhindern. Bei der Leitung 24 kann es sich insbesondere um eine Edelstahlleitung handeln, die beispielsweise einen Durchmesser von 16 mm aufweisen kann. Der Druck in der Leitung 24 kann beispielsweise 2 bar betragen.

Alternativ oder zusätzlich zu der Zapfsäule 23 kann die Entnahmeeinrichtung 22, ähnlich wie die Entnahmeeinrichtung 11, ein mit Gas, in diesem Fall jedoch Flüssigerdgas, betriebenes Stromaggregat aufweisen, das beispielsweise eine Baumaschine mit Strom versorgen kann.

In Fig. 1 ist des Weiteren eine Steuereinrichtung 27 dargestellt, die zur Steuerung der Zuführeinrichtung 5, der Umwandlungseinrichtung 15, der Entnahmeeinrichtung 11 und der Entnahmeeinrichtung 22 dienen kann. Die für eine solche Steuerung der genannten Einrichtungen mittels der Steuereinrichtung 27 erforderlichen elektrischen Verbindungen sind in Fig. 1 jedoch nur angedeutet.

Um die Vorrichtung 1 einfach transportieren und problemlos montieren und demontieren zu können, ist die Vorrichtung 1 in mehreren in Fig. 2 mittels gestrichelter Linien angedeuteten Containern 28, 29, 30 und 31 angeordnet. Konkret sind im vorliegenden Fall der LNG-Tank 2, der Boil-Off-Tank 3, die CNG-Tanks 4, die Zuführeinrichtung 5, die Umwandlungseinrichtung 15 sowie Teile der Entnahmeeinrichtungen 11 und 22 in den Containern 28, 29, 30 und 31 angeordnet. Im dargestellten Ausführungsbeispiel ist die Aufteilung derart, dass der LNG-Tank 2 in dem ersten Container 28, der Boil-Off-Tank 3 mit der Verdichtungspumpe 10 in dem zweiten Container 29, die CNG-Tanks 4 in dem dritten Container 30 und die Zuführeinrichtung 5, die Umwandlungseinrichtung 15 sowie die sich nicht außerhalb der Container 28, 29, 30 und 31 befindenden Elemente der Entnahmeeinrichtungen 11 und 22 in dem vierten Container 31 angeordnet sind. Bei den Containern 28, 29, 30 und 31 kann es sich um genormte 20-Fuß, 30-Fuß, 40-Fuß usw. Container handeln. Die Container 28, 29, 30 und 31 können auf dem Wasser, der Straße oder der Schiene transportiert werden, nachdem sie zuvor funktionsfertig installiert wurden. Beim Aufbau der Vorrichtung 1 auf einem Betriebsgelände bzw. einer Baustelle werden die Container 28, 29, 30 und 31 mittels geeigneter Verbindungseinrichtungen miteinander verrohrt und elektrisch verbunden. Anschließend können die Zapfsäulen 12 und gegebenenfalls 23 sowie die Steuereinrichtung 27 an den entsprechenden Stellen angeschlossen werden. Gegebenenfalls kann sich die Steuerungseinrichtung 27 in einem der Container, vorzugsweise in dem Container 31, jedoch auch in einem weiteren, nicht dargestellten Container, befinden.

Mit der oben beschriebenen Vorrichtung 1 kann ein Verfahren zur Weiterverwertung von Boil-Off-Gas als Antriebsstoff für die mit Erdgas betriebenen Verbraucher durchgeführt werden, bei dem das Boil-Off-Gas nicht verbrannt oder gar abgeblasen, sondern über die Entnahmeeinrichtung 11 von den Verbrauchern genutzt werden kann.

In den Figuren 3 bis 6 sind von der Erfindung umfasste Ausführungsformen der Vorrichtung 1 dargestellt. Hierbei ist der Verbraucher jeweils als der dem Nutzfahrzeug 40 zugeordnete Verbrennungsmotor 41 zum Antrieb der Räder des Nutzfahrzeugs 40 ausgebildet, der mit Gas betreibbar ist. Von dem Nutzfahrzeug 40 ist im vorliegenden Fall lediglich eine Zugmaschine 53 dargestellt. Das Nutzfahrzeug 40 kann des Weiteren einen nicht dargestellten Anhänger, einen sogenannten Koffer oder einen ähnlichen Aufbau auf der Zugmaschine 53 bzw. auf einem andersartig ausgeführten Zugfahrzeug aufweisen.

Die Vorrichtung 1 gemäß Fig. 3 weist mehrere LNG-Tanks 43 auf, die zur Aufnahme von LNG, also liquified natural gas bzw. Flüssigerdgas, dienen. Des Weiteren weist die Vorrichtung 1 wenigstens einen, im vorliegenden Fall zwei Boil-Off-Tanks 42 auf, die zur Aufnahme von aus dem LNG-Tank 43 austretendem Boil-Off-Gas dienen. Sobald jeweilige, in den LNG-Tanks 43 angeordnete Temperatursensoren 56 anschlagen, beispielsweise bei einer Temperatur von ca. 140° C, wird das entstandene Boil-Off-Gas mittels jeweiliger Zuführeinrichtungen 51, die ähnlich der Zuführeinrichtung 5 aufgebaut bzw. ausgebildet sein können und im vorliegenden Fall jeweils einen Wärmetauscher 55 aufweisen, den Boil-Off-Tanks 42 zugeführt. Das Boil-Off-Gas aus den Boil-Off-Tanks 42 wird dem Verbrennungsmotor 41 über nicht bezeichnete Leitungen zugeführt.

Mittels einer Umwandlungseinrichtung 44, die ähnlich der Umwandlungseinrichtung 15 aufgebaut bzw. ausgebildet sein kann, kann außerdem das Flüssigerdgas aus dem LNG-Tank 43 in CNG bzw. Erdgas umgewandelt und dem Verbrennungsmotor 41 direkt zugeführt werden.

Einige der Zuführeinrichtungen 51 dienen zur Zuführung des Flüssigerdgases zu einem von mehreren CNG-Tanks 45. Im vorliegenden Fall sind drei CNG-Tanks 45 vorgesehen, in denen sich CNG, also compressed natural gas, befindet. Die CNG-Tanks 45 sind vorzugsweise zwischen der Umwandlungseinrichtung 44 und dem Verbrennungsmotor 41 angeordnet.

Der Verbrennungsmotor 41 kann demnach alternativ aus den Boil-Off-Tanks 42, den LNG-Tanks 43 oder den CNG-Tanks 45 mit Gas versorgt werden. Hierzu sind im vorliegenden Fall der Verbrennungsmotor 41, die Umwandlungseinrichtung 44, die Boil-Off-Tanks 42, die LNG-Tanks 43 und die CNG-Tanks 45 mit einer Steuereinrichtung 50 verbunden. Die Steuereinrichtung 50 fungiert als Vorrang-/Nachrangschaltung bzw. wird im Sinne einer Vorrang/Nachrangschaltung betrieben. In diesem Zusammenhang ermittelt die Steuereinrichtung 50, aus welchem Tank zuerst Gas herausgenommen wird, in welcher Reihenfolge die Gasentnahme erfolgt und ob gegebenenfalls ein Tank übersprungen wird. In einem möglichen Fall wird zuerst Boil-Off-Gas aus dem Boil-Off-Tank 42 entnommen, erst nach Unterschreiten einer bestimmten Füllmenge in dem Boil-Off-Tank 42 wird nacheinander aus den CNG-Tanks 45 das Gas entnommen und zuletzt wird mittels der Umwandlungseinrichtung 44 LNG aus dem LNG-Tank 43 in CNG umgewandelt und dem Verbrennungsmotor 41 zugeführt. In einem anderen möglichen Fall wird wiederum zuerst Boil-Off-Gas aus dem Boil-Off-Tank 42 entnommen, erst nach Unterschreiten einer bestimmten Füllmenge in dem Boil-Off-Tank 42 wird aus dem LNG-Tank 43 mittels der Umwandlungseinrichtung 44 LNG in CNG umgewandelt und dem Verbrennungsmotor 41 zugeführt und erst zuletzt werden die CNG-Tanks 45 zugeschaltet bzw. es wird Gas aus den CNG-Tanks 45 entnommen. Die Steuereinrichtung 50 ist so programmiert, dass bei jedem Vorkommen an Boil-Off-Gas automatisch auf den Startmodus geschaltet wird. Gegebenenfalls werden bei fehlenden Füllmengen die einzelnen Schritte übersprungen.

Grundsätzlich sollte in den Boil-Off-Tanks 42 immer genügend Platz für nachkommendes Boil-Off-Gas aus dem jeweiligen LNG-Tank 43 zur Verfügung stehen. Wenn das Gasvolumen in einem der Boil-Off-Tanks 42 eine gewisse Füllmenge überschreitet, wird deshalb dieser Boil-Off-Tank 42 vorrangig geschaltet, d. h. die Gasentnahme erfolgt dann aus diesem Boil-Off-Tank 42. Die Füllmenge des Boil-Off-Gases in dem Boil-Off-Tank 42 bereitet im Grunde solange keine Probleme, bis eine bestimmte Füllmenge überschritten wird. Diese Schwelle für die Füllmenge kann eingestellt und mit einem nicht dargestellten Füllstandsmesser überwacht werden.

Die LNG-Tanks 43, die Boil-Off-Tanks 42, die CNG-Tanks 45, die Zuführeinrichtung 51, die Steuereinrichtung 50 und die Umwandlungseinrichtung 44 sind im vorliegenden Fall alle an der Zugmaschine 53 angebracht.

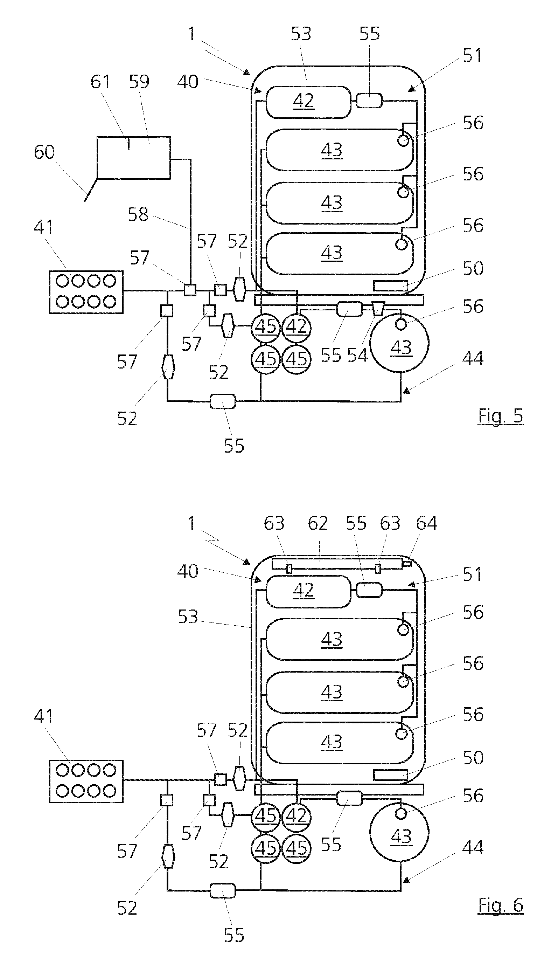

In Fig. 5 ist eine die Ausführungsform der Figuren 3 und 4 weiterbildende Ausführungsform der Vorrichtung 1 dargestellt. Dabei ist in einer zu dem Verbrennungsmotor 41 führenden Leitung ein Druckregler 57 angeordnet, von dem eine Abzweigleitung 58 in ein Abgassystem 59 des Verbrennungsmotors 41 führt. Wenn sich der Gasdruck in der zu dem Verbrennungsmotor 41 führenden Leitung über einen bestimmten Druck, beispielsweise 25 bar, erhöht, erfolgt über den Druckregler 57 ein Gasablass über die Abzweigleitung 58 in das Abgassystems 59 des Verbrennungsmotors 41 und wird in einem Rohr 60 vorzugsweise emissionsfrei nach Euro VI verbrannt. Diese Druckerhöhung kann mittels jeweiliger, an einem geeigneten Ort verbauter Drucksensoren 52 festgestellt werden. Die Zündung erfolgt durch eine automatische Ansteuerung einer in dem Abgassystem vorgesehenen, im vorliegenden Fall als Zündkerze ausgebildeten Zündeinrichtung 61. Beispielsweise ist als Zündeinrichtung 61 auch eine Piezo-Zündeinrichtung möglich.

Fig. 6 zeigt eine weitere die Ausführungsform der Figuren 3 - 5 weiterbildende Ausführungsform der Vorrichtung 1, die gegebenenfalls mit der in Fig. 6 dargestellten Ausführungsform der Vorrichtung 1 kombiniert werden kann. Dabei ist an der Zugmaschine 53 ein Feuerlöschmittel-Behälter 62 angeordnet, der mit wenigstens einem, im vorliegenden Fall mit zwei Ventilen 63 zur Ausgabe des Feuerlöschmittels verbunden ist. Die Ventile 63 sind mit einem Brandmelder 64 verbunden. Im Brandfall erfolgt über den Brandmelder 64 die Öffnung der Ventile 63, sodass aus dem im vorliegenden Fall ein Volumen von 15 Liter fassenden Feuerlöschmittel-Behälter 62 vorzugsweise Halon zur Löschung des Brandes freigesetzt wird. Alternativ ist auch eine manuelle Freischaltung zur Ausgabe des Feuerlöschmittels aus dem Feuerlöschmittel-Behälter 62 möglich.

Im vorliegenden Fall sind die LNG-Tanks 43, die Boil-Off-Tanks 42 und die CNG-Tanks 45 in beispielhafter Anzahl und an beispielhaften Positionen an der Zugmaschine 53 des Nutzfahrzeugs 40 angebracht. Grundsätzlich sind auch andere Anzahlen und/oder Positionen der LNG-Tanks 43, der Boil-Off-Tanks 42 und der CNG-Tanks 45 möglich. Insbesondere können die Positionen der LNG-Tanks 43, der Boil-Off-Tanks 42 und der CNG-Tanks 45 an die jeweilige Bauform der Zugmaschine 53 angepasst werden. Wie bereits erwähnt, kann auf die CNG-Tanks 45 auch verzichtet werden.

## Patentansprüche

1. Vorrichtung (1) zur Gasversorgung von Verbrauchern, mit folgenden Merkmalen:
- wenigstens einem LNG-Tank (43) zur Aufnahme von Flüssigerdgas,
- wenigstens einem Boil-Off-Tank (42) zur Aufnahme von aus dem LNG-Tank (43) austretendem Boil-Off-Gas,
- einer Zuführeinrichtung (51) zur Zuführung des aus dem wenigstens einen LNG-Tank (43) austretenden Boil-Off-Gases zu dem wenigstens einen Boil-Off-Tank (42),
- einer Umwandlungseinrichtung (44) zur Umwandlung des in dem LNG-Tank (43) enthaltenen Flüssigerdgases in gasförmiges Gas,
- wobei der Verbraucher ein mit Gas betreibbarer Verbrennungsmotor (41) eines Nutzfahrzeugs (40) ist,
- und wobei der wenigstens eine LNG-Tank (43) und der wenigstens eine Boil-Off-Tank (42) an einer Zugmaschine (53) des Nutzfahrzeugs (40) angebracht sind.

2. Vorrichtung nach Anspruch 1,
**gekennzeichnet durch**
wenigstens einen CNG-Tank (45) zur Aufnahme von gasförmigem Gas und zur Zuführung des Gases zu dem Verbrennungsmotor (41).

3. Vorrichtung nach Anspruch 2,
**gekennzeichnet durch**
der wenigstens eine CNG-Tank (45) an der Zugmaschine (53) des Nutzfahrzeugs (40) angebracht ist.

4. Vorrichtung nach Anspruch 2 oder 3,
**dadurch gekennzeichnet, dass**
mehrere CNG-Tanks (45) vorgesehen sind.

5. Vorrichtung nach einem der Ansprüche 1 bis 4,
**gekennzeichnet durch**
eine Steuereinrichtung (50) zur Steuerung der Reihenfolge der Entnahme von Gas aus dem Boil-Off-Tank (42), dem LNG-Tank (43) und gegebenenfalls dem CNG-Tank (45).

6. Vorrichtung nach Anspruch 5,
**dadurch gekennzeichnet, dass**
die Steuereinrichtung (50) die Entnahme von Gas derart steuert, dass die Entnahme zuerst aus dem Boil-Off-Tank (42) und nach Unterschreiten einer bestimmten Füllmenge in dem Boil-Off-Tank (42) aus dem LNG-Tank (43) oder gegebenenfalls dem CNG-Tank (45) erfolgt.

7. Vorrichtung nach einem der Ansprüche 1 bis 6,
**dadurch gekennzeichnet, dass**
die Zuführeinrichtung (51) zur Zuführung des aus dem wenigstens einen LNG-Tank (43) austretenden Boil-Off-Gases zu dem wenigstens einen Boil-Off-Tank (42) einen Wärmetauscher (55) aufweist.

8. Vorrichtung nach einem der Ansprüche 1 bis 7,
**dadurch gekennzeichnet, dass**
in einer zu dem Verbrennungsmotor (41) führenden Leitung ein Druckregler (57) angeordnet ist, von dem eine Abzweigleitung (58) in ein Abgassystem (59) des Verbrennungsmotors (41) führt.

9. Vorrichtung nach Anspruch 8,
**dadurch gekennzeichnet, dass**
in dem Abgassystem (59) eine Zündeinrichtung (61) vorgesehen ist.

10. Vorrichtung nach einem der Ansprüche 1 bis 9,
**dadurch gekennzeichnet, dass**
an der Zugmaschine (53) ein Feuerlöschmittel-Behälter (62) angeordnet ist, der mit wenigstens einem Ventil (63) zur Ausgabe des Feuerlöschmittels verbunden ist, welches mit einem Brandmelder (64) verbunden ist.
